# EUROPÄISCHE PATENTSCHRIFT

(11) **EP 1 136 286 B1**
(45) Veröffentlichungstag und Bekanntmachung des Hinweises auf die Patenterteilung: **01.06.2005**
(21) Anmeldenummer: 01106926.7
(22) Anmeldetag: 20.03.2001
(51) Int. Cl.: B60C 23/04

(54) **Reifenluftdruck-Anzeigevorrichtung**
Tyre pressure indicator
Indicateur de pression de pneumatique

(30) Priorität: 22.03.2000 DE 10014076
(43) Veröffentlichungstag der Anmeldung: 26.09.2001
(73) Patentinhaber: Nolex AG, 7500 St. Moritz (CH)
(72) Erfinder: Achterholt, Rainer, 87435 Kempten (DE)
(74) Vertreter: Brehm, Hans-Peter

(56) Entgegenhaltungen:
- EP-A- 0 995 619
- DE-A- 19 720 123
- US-A- 5 463 374

## Beschreibung

Die vorliegende Erfindung betrifft eine Reifenluftdruck-Anzeigevorrichtung für ein Fahrzeug mit mehreren Rädern, die je mit einem Luftreifen ausgerüstet sind, wobei
- jeder überwachte Luftreifen mit einem Elektronikmodul versehen ist, das wenigstens einen integrierten Drucksensor mit Meß- und Steuerelektronik aufweist, der mit einer HF-Sende/Empfangseinrichtung gekoppelt ist (kurz: Moduleinrichtung);
- entfernt von den Rädern wenigstens eine weitere, mit einem Mikroprozessor gekoppelte HF-Sende/Empfangseinrichtung (kurz: Mastereinrichtung) vorhanden ist, die für eine bidirektionale HF-Signaldatenkommunikation im Abfrage-Antwort-Modus mit jeder Moduleinrichtung ausgelegt ist;
- der Reifendruckstatus jedes überwachten Luftreifens an einem oder mehreren Anzeigeelement(en) einer Anzeigevorrichtung angezeigt wird, die mit Hilfe von, vom Mikroprozessor erzeugten Anzeigesignalen angesteuert wird.

Ferner betrifft die Erfindung eine, für Kraftfahrzeuge bestimmte Fernbedienungs-Schließeinrichtung für eine solche Reifenluftdruck-Anzeigevorrichtung. Weiterhin betrifft die Erfindung ein Verfahren zum Betrieb einer solchen Reifenluftdruck-Anzeigevorrichtung.

Im Rahmen dieser Unterlagen bezeichnet
- "Moduleinrichtung" einen Bestandteil des Elektronikmoduls am bzw. im Luftreifen, nämlich ein integriertes Bauelement mit Drucksensor (und wahlweise Temperatursensor) mit Meß- und Steuerelektronik, der mit einer HF-Sende/Empfangseinrichtung gekoppelt ist.
- "Mastereinrichtung" eine entfernt von den Rädern befindliche und mit einem Mikroprozessor gekoppelte HF-Sende/Empfangseinrichtung, die im Abfrage-Antwort-Modus HF-Funktelegramme mit jeder Moduleinrichtung austauschen kann.

Eine Reifenluftdruck-Anzeigevorrichtung der vorstehend genannten Art ist bekannt. So offenbart die US-Patentschrift 4,376,931 (Komatu et al.) ein System zur Erfassung von Druckabweichungen in Luftdruckreifen, wobei jedem Rad eine benachbart im Radkasten angeordnete Antenne der Mastereinrichtung zugeordnet ist. Diese Antenne sendet bei der Eigenfrequenz eines Kristallresonators der Moduleinrichtung. Unmittelbar nach Beendigung der Aussendung schwingt der Kristallresonator nach und übermittelt eine Resonanzfrequenz an die räumlich zugeordnete Antenne, die das aufgefangene Signal an den Empfänger der Mastereinrichtung weiterleitet. Je nach Ausgestaltung dient ein Ausbleiben oder ein Auftreten der Resonatorfrequenz als Anzeichen einer Druckabweichung. Im Falle mehrerer Räder kann die Mastereinrichtung die Anzahl der Moduleinrichtungen zeitlich nacheinander abfragen. Im Falle von Zwillingsreifen kann jede Moduleinrichtung einen Kristallresonator mit unterschiedlicher Eigenfrequenz aufweisen. Jedoch erfolgt in jedem Falle die Koppelung zwischen den Antennen jeder Moduleinrichtung und den Antennen der Mastereinrichtung über je eine räumlich benachbarte Anordnung, welche induktive Koppelung sicherstellt.

Nach diesem bekannten Vorschlag kann, kontinuierlich am fahrenden Fahrzeug eine Reifenluftdruck-Überwachung vorgenommen werden. Alternativ kann der Reifendruck lediglich beim Starten des Fahrzeuges geprüft werden.

Diese bekannte Reifendruck-Anzeigevorrichtung arbeitet typischerweise bei einer Eigenfrequenz der Kristallresonatoren von 4 MHz.

Die US-Patentschrift 5,289,160 (Fiorletta) beschreibt ein vergleichbares Reifendruck-Uberwachungssystem, bei welchem die Signalübermittlung zwischen der Mastereinrichtung und der Moduleinrichtung mit Hochfrequenz (HF) im Bereich von 900 bis 945 MHz erfolgt. Die Trägerfrequenz kann mit einem binären Code moduliert sein, der eine eigene Kennung (identifying code) für jede Moduleinrichtung vorsieht. Die Zuordnung eines empfangenen Funktelegramms zum "sendenden Rad" kann über diese Kennung erfolgen.

Erfahrungsgemäß erfordert die leitungsgebundene Übermittlung der an den fahrzeugseitigen Antennen empfangenen Funktelegramme zu einer zentralen Auswerteeinrichtung spezielle (und teuere), geschirmte HF-Kabel. Die Nachrüstung eines Fahrzeugs mit solchen HF-Kabeln ist aufwendig und teuer.

Die US-Patentschrift 5,463,374 (Mendez et al.) betrifft ein Verfahren und eine Vorrichtung, je zur gemeinsamen Reifendrucküberwachung und zum Empfang der Steuerbefehle einer Fernbedienungs-Schließeinrichtung ("elektronischer Schlüssel"). Der Druck in jedem Reifen wird mit Hilfe von je einer Moduleinrichtung ermittelt und telemetrisch an eine Mastereinrichtumg im Fahrzeug übermittelt. Nach diesem bekannten Vorschlag ist nur eine Ein-Wege-Kommunikation zwischen Moduleinrichtung und Mastereinrichtung möglich. Der Kontroller in einer Moduleinrichtung wird beispielsweise aktiviert, wenn ein vorgegebener Druck-Schwellenwert unterschritten oder überschritten ist, ferner wenn ein Beschleunigungssensor eine bestimmte Radumdrehungsgeschwindigkeit und damit eine bestimmte Fahrzeuggeschwindigkeit feststellt. Es ist jedoch nicht möglich, auf Anforderung zu einem bestimmten Zeitpunkt die Moduleinrichtungen zu aktivieren, weil diese nicht über einen Empfänger für HF-Signale verfügen. Die Besonderheit besteht darin, die Mastereinrichtung nicht nur zum Empfang und zur Verarbeitung der HF-Signale aus den Moduleinrichtungen zu nutzen, sondern auch zum Empfang der Signale aus einem elektronischen Schlüssel, um daraufhin die Schließanlage am Fahrzeug zu betätigen, den Kofferraum zu öffnen und/oder die Fahrzeugbeleuchtung einzuschalten. Hierzu sind gleiche Datenformate und Nachrichtenformate für die Signale aus einerseits dem elektronischen Schlüssel und andererseits den Radmodulen vorgesehen. Mit diesem Dokument ist jedoch nicht erkannt und vorgeschlagen, die von der Mastereinrichtung erzeugten Anzeigesignale dem elektronischen Schlüssel zuzuführen und mit Hilfe von Anzeigevorrichtungen anzuzeigen, die sich am elektronischen Schlüssel befinden.

Das Dokument DE-C2-41 33 993 offenbart eine vergleichbare Vorrichtung zum Messen und Anzeigen des Druckes in einem Luftreifen eines Fahrzeugrades. Die Mastereinrichtung kann sich am Fahrzeug oder an einem besonderen, in Form eines als Handstück ausgebildeten Fernbedienungselementes befinden, das zur Druckabfrage und -anzeige in die Nähe desjenigen Luftreifens gebracht wird, dessen Luftdruck abgefragt werden soll. Hierbei ist eine drahtlose Signalübermittlung über eine Signalübermittlungsstrecke mit einer Weglänge von etwa 50 bis 200 cm vorgesehen. Das bekannte Fernbedienungselement stellt ein zusätzliches Bauteil dar, dem ansonsten keine weiteren Funktionen zugeordnet sind.

Ein vergleichbares Fernbedienungselement ist aus dem Dokument EP 0 791 488 A1 bekannt, das ein Verfahren und ein System zum Messen und Einstellen des Reifendrucks betrifft. Bei der üblichen Reifendruck-Kontrolle an einer Tankstelle oder sonstigen Servicestation werden der aktuelle Reifendruck und die aktuelle Reifentemperatur gemessen; diese Meßwerte werden in Bezug zu einem vorgegebenen Reifen-Solldruck gesetzt, und hieraus wird ein Steuerbefehl für den Druckluftspender gebildet. Nach der in den Ansprüchen 18, 19 und 20 beschriebenen Ausführungsform ist jeder Reifen mit einer Moduleinrichtung versehen, die eine Zwei-Wege-Kommunikation zu einem - zumeist vom Fahrzeug getrennten - Fernbedienungselement ermöglicht. An jedem Reifen kann der aktuelle Reifendruck und die aktuelle Reifentemperatur mit Hilfe der jeweiligen Moduleinrichtung gemessen werden, und entsprechende HF-Signale werden telemetrisch an das Fernbedienungselement übermittelt, und dort mit Hilfe einer Displayvorrichtung angezeigt. Mit Hilfe der so angezeigtten Reifendruckwerte kann die Bedienungsperson den Druckluftspender richtig bedienen, wenn der Druck in jedem Reifen korrigiert wird. Das bekannte Fernbedienungselement hat keine weiteren Funktionen; insbesondere ist es nicht dazu ausgelegt, drahtlos übermittelbare Signale für eine Fernbedienungs-Schließanlage am Fahrzeug zu erzeugen.

Aus einem anderen Bereich der Technik sind Fernbedienungs-SchlieBeinrichtungen für Kraftfahrzeuge bekannt, die beispielsweise in Form eines "elektronischen Fahrzeugschlüssels" (vergleiche die Dokumente DE-A1-38 36 458 oder DE-A1-43 08 372) oder in Form einer Chipkarte ausgebildet sind. Mit Hilfe derartiger fernsteuerbarer Schließsysteme kann aus einem Abstand von mehreren Metern zum Fahrzeug am Fahrzeug ein Steuerbefehl erzeugt werden, der eine Ent- oder Verriegelung wenigstens eines Kraftfahrzeug-Türschlosses veranlaßt oder eine Zentralverriegelungsaülage betätigt. Es ist weiterhin bekannt, mit der Signalübermittlung von der Fernbedienungs-Schließeinrichtung an das Fahrzeug am Fahrzeug weitere Funktionen auszulösen, wie etwa die Deaktivierung oder Aktivierung einer Wegfahrsperre (vergleiche das Dokument DE-A1-196 43 759) oder eine individuelle Einstellung oder Anpassung von Fahrzeug-Bedienelementen oder -Subsystemen an einen einzelnen Fahrer zu bewirken (vergleiche das Dokument DE-A1-197 53 086). Schließlich ist auch bereits eine Zwei-Wege-Kommunikation zwischen Fahrzeug und elektronischem Schlüssel vorgeschlagen worden (vergleiche das Dokument DE-A1-196 07 117) um mit Hilfe einer optisch oder akkustisch arbeitenden Anzeigevorrichtung am Schlüssel den Verschlußzustand der Tür(en), der Kofferraumklappe und/oder der Motorraumklappe am Kraftfahrzeug anzuzeigen.

Jedoch ist nach Kenntnis des Erfinders bislang ein solcher "elektronischer Fahrzeugschlüssel" noch nicht zur Anzeige des Reifenluftdruckes der Räder am Fahrzeug eingesetzt worden.

Das Dokument DE 197 24 099 A1 betrifft ein Verfahren zum Signalisieren eines exakten Reifenluftdrucks von Fahrzeugen mit Blinkleuchten. Es wird vorgeschlagen, daß vor Betreten und/oder nach Verlassen des Fahrzeugs jede Blinkleuchte ein für den Reifenluftdruck des nächstgelegenen Rades charakteristisches Lichtsignal erzeugt. Das Aussenden und/oder Unterbrechen der Lichtsignale kann willkürlich veranlaßt werden, beispielsweise durch einen drahtlos per Funk übermittelten Fernbedienungsbefehl. Dieser Befehl kann allein dazu dienen, die Lichtsignale der Blinkleuchten auszugeben und/oder zu unterbrechen, oder er kann auch dazu verwendet werden, den Betriebszustand eines anderen Aggregats, beispielsweise des Zentralverriegelungsaggregats des Fahrzeugs zu signalisieren (vergleiche Spalte 1, Zeilen 50 - 59). Diese Druckschrift enthält keine Angaben darüber, wie die Reifendruck-Informationen beschafft und/oder die Signale zur Ansteuerung der Blinkleuchten erzeugt werden. Nach der Offenbarung dieser Druckschrift soll dem Benutzer durch die von den Blinkleuchten ausgesandten Blinksignale sichtbar gemacht werden, ob der jeweilige Reifen einen ausreichenden Fülldruckzustand besitzt. Damit wird gerade nicht vorgeschlagen oder angeregt, diese Reifendruckanzeige mit Hilfe von Anzeigevorrichtungen vorzunehmen, die sich an einem vom Fahrzeug entfernten elektronischen Schlüssel befinden.

Die Aufgabe der vorliegenden Erfindung besteht darin, eine hinsichtlich Aufwand und Funktion einfachere und preiswertere Reifenluftdruck-Anzeigevorrichtung der gattungsgemäßen Art (vergleiche US-Patentschrift 4,376,931) zu schaffen.

Ausgehend von einer Reifenluftdruck-Anzeigevorrichtung für ein Fahrzeug mit mehreren Rädern, die je mit einem Luftreifen ausgerüstet sind, wobei
- jeder überwachte Luftreifen mit einem Elektronikmodul versehen ist, das wenigstens einen integrierten Drucksensor mit Meß- und Steuerelektronik aufweist, der mit einer HF-Sende/Empfangseinrichtung gekoppelt ist (kurz: Moduleinrichtung);
- entfernt von den Rädern wenigstens eine weitere, mit einem Mikroprozessor gekoppelte HF-Sende/Empfangseinrichtung (kurz: Mastereinrichtung) vorhanden ist, die für eine bidirektionale HF-Signaldatenkommunikation im Abfrage-Antwort-Modus mit jeder Moduleinrichtung ausgelegt ist;
- der Reifendruckstatus jedes überwachten Luftreifens an einem oder mehreren Anzeigeelement(en) einer Anzeigevorrichtung angezeigt wird, die mit Hilfe von, vom Mikroprozessor erzeugten Anzeigesignalen angesteuert wird,
ist die erfindungsgemäße Lösung obiger Aufgabe
dadurch gekennzeichnet, daß
zusätzlich eine Fernbedienungs-Schließeinrichtung zur Aktivierung einer Schließanlage am Fahrzeug vorhanden ist;
eine Betätigung dieser Fernbedienungs-Schließeinrichtung zur drahtlosen Übermittlung eines Steuerbefehls an das Fahrzeug zur Aktivierung einer fahrzeugseitigen Schließanlage auch eine Aktivierung der Mastereinrichtung bewirkt, die daraufhin eine Abfrage der Moduleinrichtungen unter einer solchen Ablaufsteuerung durchführt, die gewährleistet, daß zu keinem Zeitpunkt Antwortsignale aus mehreren Moduleinrichtungen gleichzeitig oder überlappend an der Mastereinrichtung eintreffen; und das oder die Anzeigeelement(e) der Reifendruckstatus-Anzeigevorrichtung an der Fernbedienungs-Schließeinrichtung oder an einem Zusatzgerät angebracht ist/sind, das an oder benachbart zu der Fernbedienungs-Schließeinrichtung angeordnet ist.

Erfindungsgemäß erfolgt die Abfrage und Anzeige des Reifenluftdruckes bei stehendem Fahrzeug vor jedem Fahrtantritt durch Betätigung der Fernbedienungs-Schließeinrichtung zur Offnung wenigstens einer Fahrzeugtüre. Dies wird als ausreichend angesehen, weil die Entwicklung von Reifen, Felgen und Ventilen einen so hohen Qualitätsstandard erreicht hat, daß die wesentliche Ursache für fehlerhaften Reifenluftdruck auf schleichenden Druckverlust zurückzuführen ist. Eine zusätzliche und permanente Kontrolle des Reifenluftdruckes am fahrenden Fahrzeug würde demgegenüber die Sicherheit nur unwesentlich erhöhen, steigert jedoch ganz wesentlich Aufwand und Kosten.

Das erfindungsgemäße Management zur Reifenluftdruck-Kontrolle vermeidet die in regelmäßigen Abständen erfolgende HF-Kommunikation zwischen der Mastereinrichtung und den Moduleinrichtungen. Dies steigert insbesondere die verwertbare Lebensdauer der Stromversorgungsquelle am Rad. Weiterhin kann für die wenigen, erfindungsgemäß vorgesehenen Funktelegramme eine höhere Feldstärke vorgesehen werden. Weiterhin vermeidet die Erfindung je eine der Mastereinrichtung zugeordnete Empfangsantenne und gegebenenfalls je einen Empfänger an jedem Radkasten. Spezielle geschirmte HF-Kabel zur Verbindung von Antenne/Empfänger an jedem Radkasten mit einem zentralen fahrzeugseitigen Auswertegerät sind nicht erforderlich. Auch läßt sich eine stabile HF-Funkverbindung zu einer Moduleinrichtung an einem stillstehenden Rad leichter erzeugen als an einem rotierenden Rad.

Das erfindungsgemäße System zur Reifenluftdruck-Kontrolle ist auch hervorragend zur Nachrüstung bestehender Fahrzeuge geeignet, weil wesentliche Einbauten und/oder Umrüstungen am Fahrzeug selbst nicht erforderlich sind.

Fernbedienungs-Schließeinrichtungen für Kraftfahrzeuge, insbesondere PkW sind bereits weit verbreitet. Insoweit erfordert die Erfindung kein zusätzliches Fernbedienungselement, sondern greift auf eine ohnehin vorgesehene Fernbedienungs-Schließeinrichtung zurück, um eine Aktivierung der Mastereinrichtung zu bewirken.

Nach einer Alternative werden die an sich bekannten Fernbedienungs-Schließeinrichtungen, etwa in Form eines "elektronischen Schlüssels" modifiziert und zusätzlich wenigstens mit dem oder den Anzeigeelement(en) der Reifendruckstatus-Anzeigevorrichtung versehen.

Nach einer anderen Alternative bleibt die bekannte Fernbedienungs-Schließeinrichtung im wesentlichen unverändert. Es wird lediglich ein äußerliches Zusatzgerät hinzugefügt, an dem sich zumindest das oder die Anzeigeelement(e) der Reifendruckstatus-Anzeigevorrichtung befinden. Dieses Zusatzgerät kann die Form eines flachen Kästchens oder einer flachen Scheibe haben und wird an der Fernbedienungs-Schließeinrichtung angebracht, beispielsweise daran angeklebt oder angeklemmt oder auf sonstige Weise dauerhaft damit verbunden, oder wird in unmittelbarer Nachbarschaft dazu angeordnet. Beispielsweise kann das Zusatzgerät in Form eines Schlüsselanhängers ausgebildet sein, der sich an einem Schlüsselring oder dergleichen befindet, an dem auch die Fernbedienungs-Schließeinrichtung angehängt ist. Diese Alternative ermöglicht eine besonders einfache und preiswerte Nachrüstung, da auch die bekannte Fernbedienungs-Schließeinrichtung nicht verändert werden muß, sondern zusätzlich nur ein einfaches, kleines Zusatzgerät bereit gestellt werden muß, an dem sich das oder die Anzeigeelement(e) der Reifendruckstatus-Anzeigevorrichtung befinden.

Nach Aktivierung der Mastereinrichtung erfolgt selbsttätig die Abfrage der Moduleinrichtung (Initialisierung) und die Anzeige des Reifendruckes für sämtliche überwachten Luftreifen, ohne daß eine spezielle Annäherung an einzelne, abzufragende Reifen erforderlich wäre.

Erfindungsgemäß erfolgt eine bidirektionale HF-Kommunikation im Abfrage-Antwort-Modus zwischen der Mastereinrichtung und den Moduleinrichtungen. Als Funktelegramme sind typischerweise modulierte HF-Datensignale vorgesehen, die Trägerfrequenzen im Bereich der ISM-Bänder (Industrial Scientific Medical Standard), also bei etwa 433 MHz, bzw. 869 MHz (in USA 915 MHz) oder bei 2,4 GHz aufweisen. Die Modulation, beispielsweise EIN/AUS-Modulation oder Amplitudenmodulation kann mit Hilfe digitaler Bitfolgen erfolgen. Typische Funkttelegramme umfassen etwa 60 bis 200 Bit und enthalten wenigstens ein Synchronisiersignal (etwa 8 bis 60 Bit), eine Adresse oder Kennung (meistens 32 oder 48 Bit), das Nutzsignal, hier zumindest ein Drucksignal und wahlweise zusätzlich ein Temperatursignal (etwa 4 bis 16 Bit) und wahlweise eine Prüfziffer. Die Aussendung eines etwa 80 Bit enthaltenden Funktelegramms dauert etwa 5 msec.

Durch wechselseitig abgestimmte, schnelle Frequenzänderungen (frequenzy hopping) kann die Sicherheit der Authentizierung und Datenübertragung beträchtlich gesteigert werden. Die Feldstärken sind typischerweise für Signalübermittlungsstrecken bis etwa 10 m ausgelegt. Eine enge räumliche Koppelung zwischen Sendeantenne und Empfangsantenne ist nicht länger erforderlich.

Die für die Erzeugung, die Aussendung und den Empfang solcher Funktelegramme erforderlichen Bauelemente und Einrichtungen sind in der Fachwelt bekannt und in zahlreichen Patentpublikationen beschrieben. Typischerweise werden kombinierte Sende- und Empfangseinrichtungen (Transceiver) eingesetzt, die in Form monolithischer, integrierter Halbleiterbauelemente mit Hybridarchitektur ausgeführt sind. Diese Transceiver können gemeinsam mit weiteren Komponenten, wie etwa Drucksensor, Temperatursensor, Spannungs- und Frequenzstabilisator, Schaltungen, Speichern, Registern, Logikelementen und dergleichen auf einer gemeinsamen Platine verwirklicht sein.

Die im bzw. am Luftreifen befindlichen Elektronikmodule können beispielsweise an einem Reifenventil befestigt sein, wie das in den Dokumenten DE-C2-39 30 479 oder DE-C2-43 03 583 beschrieben ist. Weiterhin können sich die Elektronikmodule an einer Ventilkappe befinden, die auf das Ventilrohr eines herkömmlichen Reifenventils eines Luftreifens aufschraubbar ist, wie das in den Dokumenten DE-C2-39 30 480 oder DE-C2 43 03 591 beschrieben ist. Weiterhin können diese Elektronikmodule auch innerhalb des Luftreifens an der Felge eines Fahrzeugrades befestigt sein, wie das in den Dokumenten EP-A2-0 816 137, EP-A2-0 925 958 oder EP-A2-0 936 089 beschrieben ist. Wichtig ist, daß diese Elektronikmodule - auf Anforderung der Mastereinrichtung hin - ein Funktelegramm in Form eines HF-Signals erzeugen, das wenigstens Nutzsignale enthält, welche die wichtigsten aktuellen Zustandsgrößen des Luftreifens angeben, also insbesondere den Reifendruck und gegebenenfalls die Reifentemperatur.

Vorteilhafte Ausgestaltungen und Weiterbildungen der Erfindung ergeben sich aus den Unteransprüchen.

Die an der Mastereinrichtung eintreffenden Funktelegramme werden dort verarbeitet und ausgewertet. Die Verarbeitung schließt ein eine Demodulation, eine Decodierung, und vorzugsweise ein Vergleich von Kennungen mit in einem Register des Mikroprozessors gespeicherten Kennungen zur Identifizierung des "sendenden Rades". Bei der Auswertung der Nutzsignale werden Anzeigesignale gebildet, welche zur Ansteuerung einer Anzeigevorrichtung dienen. Bei dem hier angestrebten System ist eine einfache JA oder NEIN Aussage ausreichend; beispielsweise kann jedem überwachten Reifen eine eigene, am elektronischen Schlüssel oder an dem Zusatzgerät befindliche Leuchtdiode zugeordnet sein, die einen ordnungsgemäßen Reifendruckstatus mit grünem Licht, sowie einen fehlerhaften Reifendruckstatus mit rotem Licht anzeigt. In diesem Falle muß der Mikroprozessor die zutreffende Diode selektieren und den zutreffenden Reifendruckstatus liefern. Eine Ablaufsteuerung löscht die Leuchtanzeige nach einer gegebenen Zeitspanne.

Alternativ kann an jedem Anzeigeelement eine digitale Anzeige realer, gemessener Reifenluftdruckwerte erfolgen. In einem solchen Falle sind die Anzeigeelemente an der Fernbedienungs-Schließeinrichtung oder an dem Zusatzgerät zweckmäßigerweise als Flüssigkristallanzeigen ausgebildet.

Die aus einem oder mehreren Anzeigeelement(en) bestehende Anzeigevorrichtung befindet sich an der Fernbedienungs-Schließeinrichtung oder an dem Zusatzgerät. Bei einer räumlichen Trennung zwischen Mastereinrichtung und Anzeigevorrichtung erfolgt eine drahtlose Fernübermittlung der Anzeigesignale von der beispielsweise im/am Fahrzeug befindlichen Mastereinrichtung an die an der Fernbedienungs-Schließeinrichtung (= elektronischer Schlüssel) oder an dem Zusatzgerät befindliche Anzeigevorrichtung.

Zusätzlich kann der Mikroprozessor einer fahrzeugseitigen Mastereinrichtung die Anzeigesignale auch über eine Bus- oder Diagnose-Schnittstelle in das Fahrer-Informations-System einspeisen, das für die bekannten Symbolanzeigen am Armaturenbrett sorgt.

Die Mastereinrichtung kann in die Fernbedienungs-Schließeinrichtung integriert sein. In diesem Falle ist vorzugsweise eine einheitliche modifizierte Mastereinrichtung vorgesehen, die sowohl die Funktion(en) der Fernbedienungs-Schließeinrichtung ausüben kann, wie die Moduleinrichtungen abfragen und deren Funktelegramme auswerten kann. Sämtliche Funktionen werden von einem einzigen Bauteil mit integrierten, komplexen Komponenten ausgeführt; dies spart am elektronischen Schlüssel Platz und Gewicht. In bekannter Weise ist dieses Bauteil in einem im Kopf des Schlüssels ausgebildeten Hohlraum untergebracht. Die Implementierung der erfindungsgemäßen Reifenluftdruck-Anzeigevorrichtung erfordert lediglich die Bereitstellung eines so modifizierten elektronischen Schlüssels und die Anbringung je eines Elektronikmoduls an bzw. in den Luftreifen.

Sofern sich die Anzeigeelemente der Anzeigevorrichtung zur Anzeige des Reifendruckstatus ebenfalls und ausschließlich am elektronischen Schlüssel befinden, kann zwischen dem Mikroprozessor der Mastereinrichtung und diesen Anzeigeelementen eine einfache, leitungsgebundene Signalübermittlung vorgesehen werden.

Sofern der Fernbedienungs-Schließeinrichtung ein Zusatzgerät zugeordnet ist, an dem sich das/die Anzeigeelement(e) befinden, kann die Mastereinrichtung auch an oder in diesem Zusatzgerät untergebracht sein. Auch in diesem Falle handelt es sich bei dem Zusatzgerät um eine passive Einrichtung, und eine Aktivierung der an oder in dem Zusatzgerät untergebrachten Mastereinrichtung erfolgt ausschließlich durch Betätigung des Tasters an der Fernbedienungs-Schließeinrichtung. Vorzugsweise erfaßt die im oder an dem Zusatzgerät untergebrachte Mastereinrichtung eine solche Tasterbetätigung berühungsfrei, insbesondere durch kapazitive, induktive oder telemetrische Erfassung der durch die Tasterbetätigung ausgelösten Feldänderung in der unmittelbaren Umgebung der Fernbedienungs-Schließeinrichtung.

Nach einer weiteren alternativen Ausführungsform befindet sich die Mastereinrichtung festinstalliert am Fahrzeug. Die Feldstärke der Funktelegramme kann an die Ubermittlung im Bereich des Fahrzeugs angepaßt werden. In diesem Falle kann eine herkömmliche Fernbedienungs-Schließeinrichtung vorgesehen werden, deren Datensignal nicht nur die Schließanlage am Fahrzeug aktiviert, sondern unmittelbar oder mittelbar auch eine Aktivierung der Mastereinrichtung am Fahrzeug bewirkt. Diese Ausführungsform ist insbesondere dann vorzuziehen, wenn die Sende/Empfangsantenne und/oder die den Mikroprozessor einschließlich erforderlicher Kontroll-, Speicher-, Auswerte- und Ansteuerelektronik umfassende Baugruppe der Mastereinrichtung so voluminös sind, daß deren Unterbringung am elektronischen Schlüssel zu einem unkomfortabel großen oder schweren Schlüssel führen würde. Auch wenn sich die Mastereinrichtung am Fahrzeug befindet, ist die Anzeigevorrichtung am elektronischen Schlüssel oder an dem Zusatzgerät vorgesehen, und es erfolgt eine drahtlose Fernübermittlung der Anzeigesignale. Diese Ausführungsform ist auch dann zweckmäßig, wenn der Datenaustausch zwischen Fernbedienungs-Schließeinrichtung und Fahrzeug mit Hilfe von Ultraschall oder Infrarotstrahlung erfolgt; mit diesen Medien können auch die Anzeigesignale übertragen werden.

Nach einer weiteren Ausgestaltung kann vorgesehen sein, daß die am Fahrzeug befindliche Mastereinrichtung von demjenigen Steuerbefehl aktiviert wird, der auch die Entriegelung wenigstens eines Kraftfahrzeug-Türschlosses veranlaßt. Dieser Steuerbefehl wird typischerweise leitungsgebunden an die Schließanlage übermittelt, und bei einer erfindungsgemäß vorgesehenen Nachrüstung kann diese Leitung mit einer Manschette umwickelt werden, welche das Auftreten dieses Steuerbefehls induktiv oder kapazitiv erfaßt und die Mastereinrichtung entsprechend aktiviert.

Bekanntlich verwenden bekannte Fernbedienungs-Schließeinrichtungen umfangreiche Codierungen und Decodierungen um zu gewährleisten, daß eine gegebene Fernbedienungs-Schließeinrichtung tatsächlich nur dasjenige Kraftfahrzeug öffnet oder sperrt, für das diese Fernbedienungs-Schließeinrichtung bestimmt ist. Diese Ausgestaltung der Erfindung nutzt die ohnehin vorhandenen Codierungen und Decodierungen. Die Übermittlung der Funktelegramme an die Elektronikmodule erfolgt erst dann, nachdem das Fahrzeug selektiert ist, an dem sich die Räder befinden, für deren Elektronikmodule die Funktelegramme bestimmt sind. In diesem Falle kann die Mastereinrichtung zweckmäßigerweise am Fahrzeug im Bereich derjenigen Elektronik angeordnet sein, welche die Entriegelungsfunktion am Fahrzeug steuert.

Im Rahmen der vorliegenden Erfindung erfolgt eine bidirektionale HF-Datenkommunikation unmittelbar zwischen der Mastereinrichtung und den Moduleinrichtungen an den überwachten Rädern. Die Signalübermittlungsstrecke ist bis etwa 10 m ausgelegt. Zur Authentizierung ist vorzugsweise jedes Datensignal mit einer Adresse oder Kennung versehen, und jede Empfangseinrichtung verfügt über entsprechende Speicher und Register, mit deren Hilfe ein empfangenes Signal identifiziert und einer bestimmten sendenden Quelle zugeordnet werden kann.

Vorzugsweise sind für den als Adresse oder Kennung dienenden Signalbestandteil etwa 20 bis 48 Bit reserviert. Herstellerseitig ist es ausreichend, wenn bei der Serienfertigung der Radmodule etwa 10 bis 20 verschiedene Kennungen vorgesehen, und die fertigen Radmodule entsprechend gekennzeichnet werden. Dies kann ohne weiteres durch Permutation von 4 verschiedenen Bitblöcken erreicht werden. Alternativ kann herstellerseitig jedes Radmodul mit einem einheitlichen, leeren Register ausgerüstet werden, dessen Registerplätze später bei Montage eines Rades am Fahrzeug entsprechend der jeweiligen Radposition durch Trennung oder Erzeugung bestimmter Leiterverbindungen, durch Betätigung bestimmter Schaltpunkte eines Tasterfeldes am Elektronikmodul, oder durch ähnliche bekannte Maßnahmen mit digital "0" oder "1" belegt werden.

Zur erstmaligen Belegung der den verschiedenen Radpositionen (beim PkW etwa vorne links, vorne rechts, hinten links, hinten rechts und gegebenenfalls Reserverad) zugeordneten Speicherplätzen einer mobilen Mastereinrichtung mit den entsprechenden Adressen/Kennungen der jeweiligen Radmodule kann diese mobile Mastereinrichtung, die sich an der Fernbedienungs-Schließeinrichtung oder an dem Zusatzgerät befinden kann, in die unmittelbare Nähe des jeweiligen Rades gebracht werden. An der Fernbedienungs-Schließeinrichtung oder an dem Zusatzgerät wird ein, der zu speichernden Radposition entsprechender Taster betätigt, der - bei verminderter Feldstärke - eine HF-Signaldatenkommunikation zwischen ausschließlich der Moduleinrichtung dieses Rades und der Mastereinrichtung initialisiert. Dieser Datenaustausch belegt den für eine bestimmte Radposition reservierten Speicherplatz der mobilen Mastereinrichtung mit der Adresse/Kennung der Moduleinrichtung desjenigen Rades, das sich in dieser Radposition befindet. Mit Hilfe eines Bestätigungssignals kann angezeigt werden, daß der Vorgang der Speicherung einer Adresse/Kennung erfolgreich abgeschlossen ist. Bei einem anschließenden Datenaustausch zwischen Mastereinrichtung und einer bestimmten Moduleinrichtung wird senderseitig die dort gespeicherte Adresse an der Kennungsposition in das Datensignal eingebaut, und empfängerseitig wird geprüft, ob eine Datensignaladresse mit der in der Moduleinrichtung gespeicherten Kennung übereinstimmt. Trifft das zu, wird an dieser Moduleinrichtung der Drucksensor aktiviert und eine Routine zur Erzeugung und Aussendung eines, das Drucksignal enthaltenden Datensignals gestartet. Eine an der Moduleinrichtung vorhandene Ablaufsteuerung versetzt diese Moduleinrichtung wieder in einen Ruhezustand (sleep mode), nachdem die Datensignalaussendung beendet ist.

Obwohl die vorstehend beschriebene wechselseitige Zuordnung über gespeicherte Adressen und Kennungen grundsätzlich ausreichend ist, können weitere Maßnahmen zur Unterstützung der Authentizierung und zur Förderung der Sicherheit der HF-Datenübertragung vorgesehen werden.

Bekanntlich erfolgt bei der Nahbereichs-HF-Signalübertragung nach dem Bluetooth-Standard ein rascher, gegenseitig zwischen Sender und Empfänger abgestimmter Wechsel der für die Signalübermittlung verwendeten Frequenzen und Kanäle. Vergleichbare Maßnahmen können auch für die erfindungsgemäße HF-Signalübermittlung zwischen der Mastereinrichtung und den Moduleinrichtungen vorgesehen werden.

Vorzugsweise ist jedoch je als Sende/Empfangseinrichtung in der Mastereinrichtung und in den Moduleinrichtungen ein Transceiver vorgesehen, der ein Empfangsteil mit Folgeverstärkung aufweist. Dieses Verstärkerteil umfaßt ein SAW-Filter (Surface Acoustic Wave Filter), einen ersten HF-Verstärker, einen zweiten HF-Verstärker und ein Erfassungs- und Tiefpassfilter. Die Vorspannungen der Verstärker werden - unabhängig voneinander - von einem Impulsgeber gesteuert. Ferner erfolgt eine Koppelung zwischen den beiden Verstärkern über eine SAW-Laufzeitleitung, die eine Laufzeitverzögerung von beispielsweise 0, 5 µs erzeugt. Die beiden Verstärker sind niemals gleichzeitig auf EIN geschaltet. Hierdurch wird eine ausgezeichnete Empfangsstabilität erhalten. Es kann ein Verstärkungsfaktor von mehr als 90 dB erhalten werden. Ein Transceiver mit diesem Empfängertyp erlaubt auch eine außerordentlich schnelle Umschaltung zwischen Ruhezustand (sleep mode) und Betriebszustand, sowie zwischen Senden und Empfangen, beispielsweise innerhalb einer Zeitspanne von etwa 20 bis 200 µs. Ein geeignetes Transceiver-Modul (für 433,92 MHz) wird beispielsweise von RF Monolithics, Inc., Dallas, USA unter der Handelsbezeichnung DR3100 vertrieben. Ein anderer, ebenfalls geeigneter Single Chip Very Low Power RF Transceiver wird von CHIPCON AS, Oslo, Norwegen unter der Handelsbezeichnung SmartRF CC 1000 vertrieben. Wegen seines geringen Stromverbrauchs und hoher Empfindlichkeit wird dieser Transceiver bevorzugt eingesetzt.

Im Rahmen der vorliegenden Erfindung ist eine bestimmte Ablaufsteuerung der Mastereinrichtung und der Moduleinrichtungen vorgesehen, die gewährleistet, daß zu keinem Zeitpunkt Antwortsignale aus mehreren Moduleinrichtungen gleichzeitig oder überlappend an der Mastereinrichtung eintreffen. Dies erhöht die Sicherheit bei Übertragung, Zuordnung und Auswertung der Datensignale. Hierzu kann vorgesehen werden, daß die Mastervorrichtung eine erste Moduleinrichtung abfrägt und das Eintreffen und Verarbeiten der Antwort dieser ersten Moduleinrichtung an der Mastereinrichtung abwartet, bevor die Mastereinrichtung in diesem Abfragezyklus eine zweite Moduleinrichtung abfrägt. Typischerweise vergeht zwischen dem Abfragen einer Moduleinrichtung und dem Eintreffen der Antwort aus dieser abgefragten Moduleinrichtung an der Mastereinrichtung nur eine Zeitspanne von einigen Mikrosekunden, auf jeden Fall weniger als 0,1 sec. Somit kann sicher gewährleistet werden, daß zu keinem Zeitpunkt Antwortsignale aus mehreren Moduleinrichtungen gleichzeitig oder überlappend an der Mastereinrichtung eintreffen, wenn die Mastereinrichtung eine zweite Moduleinrichtung erst dann abfrägt, nachdem wenigstens 0,2 sec, vorzugsweise 0,3 sec nach dem Abfragen der ersten Moduleinrichtung verstrichen sind. Die erforderlichen Zeitsignale können mit Hilfe eines Uhrenschwingquarzes oder mit Hilfe eines Timer-IC erzeugt werden, der mit dem Mikroprozessor der Mastereinrichtung gekoppelt oder integriert ist.

Vorzugsweise kann eine Ablaufsteuerung vorgesehen werden, die zeitlich nacheinander nachstehende Schritte vorsieht.
a) eine Betätigung eines Tasters an der Fernbedienungs-Schließeinrichtung zur Erzeugung eines Steuerbefehls der Kfz-Schließanlage bewirkt unmittelbar oder mittelbar auch eine Aktivierung der regelmäßig im Ruhezustand gehaltenen Mastereinrichtung;
b) nach ihrer Aktivierung erzeugt und sendet die Mastereinrichtung ein Abfragesignal aus, das wenigstens eine Synchronisierbitfolge für sämtliche Moduleinrichtungen und eine Adresse für eine ausgewählte Moduleinrichtung sowie gegebenenfalls eine Prüfziffer enthält. Ferner selektiert die Mastereinrichtung das der Adresse entsprechende Anzeigeelement;
c) nach Aussendung des Abfragesignals schaltet die Mastereinrichtung auf Empfang;
d) die Synchronisierbitfolge des Abfragesignals aktiviert sämtliche, regelmäßig im Ruhezustand gehaltenen Moduleinrichtungen. An jeder Moduleinrichtung läuft eine Routine ab, die überprüft, ob die im Register der Moduleinrichtung gespeicherte Kennung mit der Adresse des Abfragesignals übereinstimmt. Trifft das nicht zu, wird die jeweilige Moduleinrichtung wieder in den Ruhezustand versetzt;
e) diejenige Moduleinrichtung, die Uebereinstimmung zwischen Adresse und ihrer Kennung feststellt, löst anschließend eine Routine aus, welche den Reifendruck mißt, und ein Antwortsignal erzeugt und aussendet, das neben der Synchronisierbitfolge ein Nutzsignal enthält, das dem gemessenen Reifendruck entspricht. Anschließend nimmt auch diese Moduleinrichtung erneut den Ruhezustand ein;
f) die Mastereinrichtung empfängt das Antwortsignal, wertet dessen Nutzsignal aus, erzeugt ein entsprechendes Anzeigesignal und übermittelt dieses an das selektierte Anzeigeelement;
g) je nach Ablauf von 0,2 sec, vorzugsweise nach Ablauf von 0,3 sec werden die Schritte (b) bis (f) für jedes weitere zu prüfende Rad wiederholt, wobei jeweils die dem zu prüfenden Rad entsprechende Adresse gewählt und in das Abfragesignal eingesetzt wird;
h) nach Beendigung der Abfrage aller zu prüfenden Räder nimmt die Mastereinrichtung wieder ihren Ruhezustand ein;
i) nach Ablauf einer gegebenen Zeitspanne wird die von den Anzeigeelementen erzeugte Reifendruckstatuts-Anzeige gelöscht.

Eine modifizierte Ablaufsteuerung kann zusätzlich zu den ansonsten unverändert bleibenden Schritten nachstehende modifizierte Schritte vorsehen:
c') nach Aussendung des Abfragesignals aktiviert die Mastereinrichtung ein Register, das eine Kennung enthält, die der gerade gesendeten Adresse entspricht, und schaltet daraufhin auf Empfang;
e') die Moduleinrichtung sendet ein Antwortsignal, das zusätzlich zu Synchronisierbitfolge und Nutzsignal auch die Kennung der sendenden Moduleinrichtung enthält;
f' ) die Mastereinrichtung empfängt das Antwortsignal, prüft ob die im Antwortsignal enthaltene Kennung mit der an der Mastereinrichtung aktivierten Kennung übereinstimmt und führt bei festgestellter Übereinstimmung die weiteren Teilschritte des Schrittes (f) aus.

Diese Modifizierung ergibt eine noch größere Sicherheit bei Übertragung und Zuordnung der Datensignale.

Alle vorgenannten Schritte (a) bis (h) zusammengenommen können innerhalb einer Zeitspanne kleiner 2 sec ablaufen, so daß ein Benutzer unmittelbar nach Betätigung des Tasters zur Auslösung und Fernübermittlung des Steuerbefehls zur Öffnung einer Fahrzeugtüre an der dazu benutzten Fernbedienungs-Schließeinrichtung oder an dem damit verbundenen oder dazu benachbarten Zusatzgerät eine optische Anzeige des Reifendruckstatus zu jedem überwachten Luftreifen an seinem Fahrzeug erhält.

Die Figuren dienen zur weiteren Erläuterung der Erfindung ohne diese einzuschränken; es zeigen:
- Fig. 1: eine schematische Draufsicht auf einen erfindungsgemäß weitergebildeten elektronischen Schlüssel;
- Fig. 2: in einer Seitenansicht einen herkömmlichen elektronischen Schlüssel, an dem ein erfindungsgemäßes Zusatzgerät angebracht ist; und
- Fig. 3: eine schematische Draufsicht auf das Zusatzgerät nach Fig. 2.

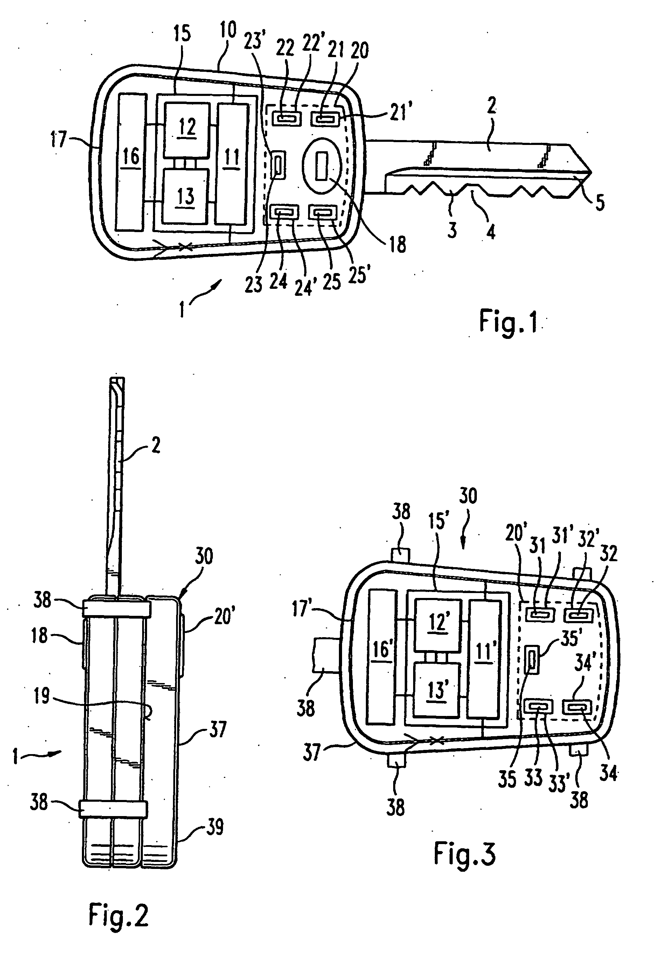

Die Figur 1 zeigt - in vergrößertem Maßstab - einen beispielhaften "elektronischen Fahrzeugschlüssel" einer erfindungsgemäßen Reifendruck-Anzeigevorrichtung.

Der dargestellte "elektronische Fahrzeugschlüssel" 1 besteht in an sich bekannter Weise aus einem metallischen Schlüssel 2 und einem Kopf 10, an welchem der Schlüssel 2 befestigt ist. Der Schlüssel 2 bildet ein längliches flaches, klingenförmiges Element, das wenigstens längs einer Längskante mit Zacken 3 und Kerben 4 versehen ist; zusätzlich kann eine Profilierung 5 in Längsrichtung vorgesehen sein.

Der ebenfalls flache, aus Kunststoff bestehende Kopf 10 ist typischerweise aus zwei Hälften gebildet, die einen Hohlraum begrenzen. In diesem Hohlraum sind die Elektronik, eine Stromversorgungsquelle und gegebenenfalls weitere Komponenten untergebracht. Die lediglich schematisch angedeuteten Elektronikkomponenten umfassen einen Transceiver 11, einen Mikroprozessor (Controller) 12 mit elektronischem Speicher und entsprechenden Registern, eine Codier/Decodier-Einrichtung 13 und dgl., die typischerweise als gemeinsames integriertes Bauelement ausgebildet sind. Alle diese Komponenten zusammengenommen können eine Mastereinrichtung 15 bilden. Die Stromversorgungsquelle 16 kann eine Batterie mit hoher Energiedichte, oder ein wiederaufladbarer Akkumulator oder Kondensator sein, der über das Zündschloss galvanisch oder berührungsfrei aufgeladen werden kann. Der Transceiver 11 ist mit einer Sende/Empfangsantenne 17 verbunden. Mit Hilfe eines Tasters 18 kann ein Steuerbefehl zur Aktivierung einer Schließanlage am Fahrzeug ausgelöst werden, die weiterhin eine Fahrzeugtür entriegelt.

Weiterhin befindet sich an diesem elektronischen Fahrzeugschlüssel 1 eine Anzeigevorrichtung 20, mit welcher der Reifendruckstatus aller überwachter Luftreifen des Fahrzeugs angezeigt werden kann. In der dargestellten Ausführungsform umfaßt diese Anzeigevorrichtung 20 fünf Anzeigeelemente 21, 22, 23, 24, 25, die den verschiedenen Radpositionen (vorne links, vorne recht, hinten links, hinten rechts und Reserverad) zugeordnet sind. Zu jedem Anzeigeelement gehört eine Leuchtdiode, die in verschiedenen Farben, beispielsweise grün oder rot aufleuchten kann. Jedes Anzeigeelement 21, 22, 23, 24, 25 sitzt auf einem verstellbaren Taster 21', 22', 23', 24', 25', dessen Betätigung gezielt und ausschließlich eine Initialisierung zum Austausch und zur Speicherung von Adressen und Kennungen zwischen Mastereinrichtung und derjenigen Moduleinrichtung auslöst, die sich an demjenigen Rad befindet, welchem der gerade betätigte Taster 21', 22', 23', 24' oder 25' zugeordnet ist.

Fig. 2 zeigt einen herkömmlichen elektronischen Fahrzeugschlüssel 1, der im wesentlichen entsprechend dem Schlüssel 1 nach Fig. 1 ausgebildet sein kann, jedoch abweichend nicht mit einer Anzeigevorrichtung 20 versehen ist. An der zum Taster 18 entfernten Rückseite 19 dieses Schlüssels 1 ist ein Zusatzgerät 30 angebracht. Bei diesem Zusatzgerät 30 handelt es sich im vorliegenden, beispielhaften Fall um ein flaches Kästchen 37, das an die Kontur des Schlüssels 1 angepaßt ist und mit Hilfe von federnden Klammern 38 am Schlüssel 1 gehalten ist. Wie aus Fig. 3 ersichtlich, ist an der zum Schlüssel 1 entfernten Sichtseite 39 des Zusatzgerätes 30 eine Anzeigevorrichtung 20' für die optische Anzeige des Reifendruckstatus ausgebildet, die mit Leuchtdioden 31, 32, 33, 34 und 35 versehen ist, welche den verschiedenen Radpositionen zugeordnet sind. Bei Bedarf kann auch hier jedes Anzeigeelement 31, 32, 33, 34, 35 auf einem verstellbaren Taster 31', 32', 33', 34', 35' sitzen, dessen Betätigung gezielt und ausschließlich eine Initialisierung zum Austausch und zur Speicherung von Adressen und Kennungen zwischen der im/am Zusatzgerät 30 befindlichen Mastereinrichtung und derjenigen Moduleinrichtung äuslöst, die sich an demjenigen Rad befindet, welchem der gerade betätigte Taster 31', 32', 33', 34', 35' zugeordnet ist. Innerhalb des Kästchens 37 sind die elektrischen und elektronischen Komponenten 11', 12' und 13' zum Empfang der Anzeigesignale und zur Ansteuerung der Anzeigeelemente 31, 32, 33, 34 und 35 sowie eine Stromversorgungsquelle 16' und eine Empfangsantenne 17' untergebracht. Sofern in dem Zusatzgerät auch eine Mastereinrichtung 15' untergebracht ist, erfolgt deren Aktivierung berührungsfrei durch Betätigung des Tasters 18 an dem elektronischen Fahrzeugschlüssel 1.

## Patentansprüche

1. Reifenluftdruck-Anzeigevorrichtung für ein Fahrzeug mit mehreren Rädern, die je mit einem Luftreifen ausgerüstet sind, wobei
- jeder überwachte Luftreifen mit einem Elektronikmodul versehen ist, das wenigstens einen integrierten Drucksensor mit Meßund Steuerelektronik aufweist, der mit einer HF-Sende/Empfangseinrichtung gekoppelt ist (kurz: Moduleinrichtung ) ;
- entfernt von den Rädern wenigstens eine weitere, mit einem Mikroprozessor gekoppelte HF-Sende/Empfangseinrichtung (kurz: Mastereinrichtung) vorhanden ist, die für eine bidirektionale HF-Signaldatenkommunikation im Abfrage-Antwort-Modus mit jeder Moduleinrichtung ausgelegt ist;
- der Reifendruckstatus jedes überwachten Luftreifens an einem oder mehreren Anzeigeelement(en) einer Anzeigevorrichtung angezeigt wird, die mit Hilfe von, vom Mikroprozessor erzeugten Anzeigesignalen angesteuert wird,
**dadurch gekennzeichnet, daß**
zusätzlich eine Fernbedienungs-Schließeinrichtung zur Aktivierung einer Schließanlage am Fahrzeug vorhanden ist;
eine Betätigung dieser Fernbedienungs-Schließeinrichtung zur drahtlosen Übermittlung eines Steuerbefehls an das Fahrzeug zur Aktivierung einer fahrzeugseitigen Schließanlage auch eine Aktivierung der Mastereinrichtung bewirkt, die daraufhin eine Abfrage der Moduleinrichtungen unter einer solchen Ablaufsteuerung durchführt, die gewährleistet, daß zu keinem Zeitpunkt Antwortsignale aus mehreren Moduleinrichtungen gleichzeitig oder überlappend an der Mastereinrichtung eintreffen; und
das oder die Anzeigeelement(e) 'der Reifendruckstatus-Anzeigevorrichtung an der Fernbedienungs-Schließeinrichtung oder an einem Zusatzgerät angebracht ist/sind, das an oder benachbart zu der
Fernbedienungs-Schließeinrichtung angeordnet ist.

2. Reifenluftdruck-Anzeigevorrichtung nach Anspruch 1,
**dadurch gekennzeichnet, daß**
die Mastereinrichtung fest installiert am Fahrzeug angebracht ist.

3. Reifenluftdruck-Anzeigevorrichtung nach Anspruch 2,
**dadurch gekennzeichnet, daß**
der von der Fernbedienungs-Schließeinrichtung drahtlos an das Fahrzeug übermittelte Steuerbefehl zur Aktivierung der Schließanlage fahrzeugseitig decodiert wird;
das nach der Decodierung erhaltene und für das Fahrzeug charakteristische Signal eine Aktivierung (Offnen oder Schließen) der Schließanlage veranlaßt; und
dieses nach der Decodierung erhaltene und für das Fahrzeug charakteristische Signal auch zur Aktivierung der Mastereinrichtung dient.

4. Reifenluftdruck-Anzeigevorrichtung nach Anspruch 2,
**dadurch gekennzeichnet, daß**
die von der fahrzeugseitig angeordneten Mastereinrichtung gebildeten Anzeigesignale mit Hilfe von Ultraschall-, Infrarot- oder HF-Signalen an die Anzeigevorrichtung an der Fernbedienungs-SchlieBeinrichtung übermittelt werden.

5. Reifenluftdruck-Anzeigevorrichtung nach Anspruch 1,
**dadurch gekennzeichnet, daß**
die Mastereinrichtung oder eine modifizierte, auch den Steuerbefehl für die Aktivierung der fahrzeugseitigen Schließanlage erzeugende Mastereinrichtung in die Fernbedienungs-Schließeinrichtung integriert ist.

6. Reifenluftdruck-Anzeigevorrichtung nach Anspruch 1,
**dadurch gekennzeichnet, daß**
die Mastereinrichtung an oder in dem Zusatzgerät untergebracht ist; und
eine Betätigung der Fernbedienungs-Schließeinrichtung zur drahtlosen Übermittlung eines Steuerbefehls an das Fahrzeug zur Aktivierung einer fahrzeugseitigen Schließanlage auch diese Mastereinrichtung aktiviert.

7. Reifenluftdruck-Anzeigevorrichtung nach einem der
Ansprüche 1 bis 6,
**dadurch gekennzeichnet, daß**
je die Mastereinrichtung und die Moduleinrichtungen mit einem Transceiver ausgerüstet ist/sind, dessen Empfangsteil mit einer Folgeverstärkung versehen ist, die zwei Signalverstärker aufweist, die über eine SAW-Laufzeitleitung miteinander verknüpft sind; und die Signalverstärker - unabhängig voneinander - von einem Impulsgeber so angesteuert werden, daß die beiden Signalverstärker niemals gleichzeitig auf EIN geschaltet sind.

8. Reifenluftdruck-Anzeigevorrichtung nach einem der
Ansprüche 1 bis 7,
**dadurch gekennzeichnet, daß**
die Ablaufsteuerung eine Routine mit nachstehenden Schritte (a) bis (i) vorsieht:
a) eine Betätigung eines Tasters an der Fernbedienungs-Schließeinrichtung zur Erzeugung eines Steuerbefehls für die Kfz-Schließanlage bewirkt unmittelbar oder mittelbar auch eine Aktivierung der regeläßig im Ruhezustand gehaltenen Mastereinrichtung;
b) nach ihrer Aktivierung erzeugt und sendet die Mastereinrichtung ein Abfragesignal aus, das wenigstens eine Synchronisierbitfolge für sämtliche Moduleinrichtungen und eine Adresse für eine ausgewählte Moduleinrichtung sowie gegebenenfalls eine Prüfziffer enthält. Ferner selektiert die Mastereinrichtung das der Adresse entsprechende Anzeigeelement;
c) nach Aussendung des Abfragesignals schaltet die Mastereinrichtung auf Empfang;
d) die Synchronisierbitfolge des Abfragesignals aktiviert sämtliche, regelmäßig im Ruhezustand gehaltenen Moduleinrichtungen. An jeder Moduleinrichtung läuft eine Routine ab, die überprüft, ob die im Register der Moduleinrichtung gespeicherte Kennung mit der Adresse des Abfragesignals übereinstimmt. Trifft das nicht zu, wird die jeweilige Moduleinrichtung wieder in den Ruhezustand versetzt;
e) diejenige Moduleinrichtung, die Übereinstimmung zwischen Adresse und ihrer Kennung feststellt, löst anschließend eine Routine aus, welche den Reifendruck mißt, und ein Antwortsignal erzeugt und aussendet, die neben der Synchronisierbitfolge ein Nutzsignal enthält, das wenigstens Bits aufweist, die dem gemessenen Reifendruck entsprechen. Anschließend nimmt auch diese Moduleinrichtung erneut den Ruhezustand ein;
f) die Mastereinrichtung empfängt das Antwortsignal, wertet dessen Nutzsignal aus, erzeugt ein entsprechendes Anzeigesignal und übermittelt dieses an das selektierte Anzeigeelement;
g) je nach Ablauf von 0,2 sec, vorzugsweise nach Ablauf von 0,3 sec werden die Schritte (b) bis (f) für jedes weitere zu prüfende Rad wiederholt, wobei jeweils die dem zu prüfenden Rad entsprechende Adresse gewählt und in das Abfragesignal eingesetzt wird;
h) nach Beendigung der Abfrage aller zu prüfenden Räder nimmt die Mastereinrichtung wieder ihren Ruhezustand ein;
i) nach Ablauf einer gegebenen Zeitspanne wird die von den Anzeigeelementen erzeugte Reifendruckstatus-Anzeige gelöscht.

9. Reifenluftdruck-Anzeigevorrichtung nach Anspruch 8,
**dadurch gekennzeichnet, daß**
eine Routine durchgeführt wird, die anstelle der Schritte (c), (e) und (f) nachstehende Schritte (c'), (e') und (f') vorsieht:
c') nach Aussendung des Abfragesignals aktiviert die Mastereinrichtung ein Register, das eine Kennung enthält, die der gerade gesendeten Adresse entspricht, und schaltet daraufhin auf Empfang um;
e') die Moduleinrichtung sendet ein Antwortsignal, das zusätzlich zu Synchronisierbitfolge und Nutzsignal auch die Kennung der sendenden Moduleinrichtung enthält;
f') die Mastereinrichtung empfängt das Antwortsignal, prüft ob die im Antwortsignal enthaltene Kennung mit der an der Mastereinrichtung aktivierten Kennung übereinstimmt und führt bei festgestellter Obereinstimmung die weiteren Teilschritte des Schrittes (f) aus.

10. Reifenluftdruck-Anzeigevorrichtung nach Anspruch 8 oder 9,
**dadurch gekennzeichnet, daß**
je die Mastereinrichtung und die Moduleinrichtungen mit einem elektronischen Speicher mit Register (n) und Logikelementen zur Speicherung digitaler Adressen und Kennungen, sowie zur Durchführung der Routinen der Ablaufsteuerung ausgerüstet sind.

11. Fernbedienungs-Schließeinrichtung
für eine Reifenluftdruck-Anzeigevornchtung
nach einem der Ansprüche 1 bis 10,
**dadurch gekennzeichnet, daß**
die Fernbedienungs-Schließeinrichtung (1) mit einem oder mehreren Anzeigeelement(en) (21, 22, 23, 24, 25) der Reifendruckstatus-Anzeigevorrichtung (20) ausgerüstet ist, die mit Hilfe von Anzeigesignalen angesteuert wird, die von der Mastereinrichtung (15) erzeugt worden sind.

12. Fernbedienungs-Schließeinrichtung
für eine Reifenluftdruck-Anzeigevorrichtung
nach einem der Ansprüche 1 bis 10,
**dadurch gekennzeichnet, daß**
zusätzlich ein Zusatzgerät (30) vorhanden ist, das an oder benachbart zu der Fernbedienungs-Schließeinrichtung (1) angeordnet ist; und
dieses Zusatzgerät (30) mit einem oder mehreren Anzeigeelement(en) (31, 32, 33, 34, 35) der Reifendruckstatus-Anzeigevorrichtung (20') ausgerüstet ist, die mit Hilfe von Anzeigesignalen angesteuert wird, die von der Mastereinrichtung erzeugt worden sind.

13. Fernbedienungs-Schließeinrichtung nach Anspruch 11 oder 12,
**dadurch gekennzeichnet, daß**
für jeden überwachten Luftreifen ein zugeordnetes Anzeigeelement (21, 22, 23, 24, 25) an der Fernbedienungs-Schließeinrichtung (1) oder ein zugeordnetes Anzeigeelement (31, 32, 33, 34, 35) an dem Zusatzgerät (30) vorhanden ist.

14. Fernbedienungs-Schließeinrichtung nach einem der
Ansprüche 11 bis 13,
**dadurch gekennzeichnet, daß**
jedes Anzeigeelement (21, 22, 23, 24, 25 bzw. 31, 32, 33, 34, 35) eine oder mehrere Leuchtdiode(n) aufweist, die nach entsprechender Ansteuerung durch die Anzeigesignale zur Reifenluftdruckstatus-Anzeige in unterschiedlicher Farbe aufleuchten.

15. Fernbedienungs-Schließeinrichtung nach einem der
Ansprüche 11 bis 14,
**dadurch gekennzeichnet, daß**
jedes Anzeigeelement (21, 22, 23, 24, 25 oder 31, 32, 33, 34, 35)
auf einem zugeordneten Taster (21', 22', 23', 24', 25' oder 31', 32', 33', 34', 35') sitzt; und
eine Betätigung dieser Taster (21', 22', 23', 24', 25' oder 31', 32', 33', 34', 35') eine Initialisierung zum Austausch und zur Speicherung von Adressen und Kennungen zwischen der Mastereinrichtung an
der Fernbedienungs Schließeinrichtung (1) oder der Mastereinrichtung an/in dem Zusatzgerät (30) und derjenigen Moduleinrichtung auslöst, welcher ein bestimmter, gerade betätigter Taster zugeordnet ist.

16. Fernbedienungs-Schließeinrichtung nach Anspruch 11,
**dadurch gekennzeichnet, daß**
die Mastereinrichtung oder eine modifizierte, auch den Steuerbefehl für die Aktivierung der fahrzeugseitigen Schließanlage erzeugende Mastereinrichtung (15) in die Fernbedienungs-Schließeinrichtung (1) integriert ist.

17. Fernbedienungs-Schließeinrichtung nach Anspruch 12,
**dadurch gekennzeichnet, daß**
die Mastereinrichtung an oder in dem Zusatzgerät (30) untergebracht ist.

18. Verfahren zum Betrieb einer, für ein Fahrzeug mit mehreren Luftreifen bestimmten
Reifenluftdruck-Anzeigevorrichtung, die aufweist:
- an jedem überwachten Luftreifen ein Elektronikmodul, das wenigstens einen integrierten Drucksensor mit Meß- und Steuerelektronik aufweist, der mit einer HF-Sende/Empfangseinrichtung gekoppelt ist (kurz: Moduleinrichtung);
- entfernt von den Rädern wenigstens eine weitere, mit einem Mikroprozessor gekoppelte HF-Sende/Empfangseinrichtung (kurz: Mastereinrichtung), die für eine bidirektionale HF-Signaldatenkommunikation im Abfrage-Antwort-Modus mit jeder Moduleinrichtung ausgelegt ist;
- eine Anzeigevorrichtung mit einem oder mehreren Anzeigeelement(en) zur Anzeige des Reifendruckstatus jedes überwachten Lufreifens;
- eine Fernbedienungs-Schließeinrichtung, die einen Taster zur Auslösung eines Steuerbefehls aufweist, der eine Aktivierung einer Schließanlage am Fahrzeug auslöst;
**dadurch gekennzeichnet, daß**
- die Betätigung des Tasters der Fernbedienungs-Schließeinrichtung auch eine Aktivierung der Mastereinrichtung bewirkt, die daraufhin eine Initialisierung der Moduleinrichtungen durchführt;
- die Initialisierung der Moduleinrichtungen nach einer Ablaufsteuerung erfolgt, die gewährleistet, daß zu keinem Zeitpunkt Antwortsignale aus mehreren Moduleinrichtungen gleichzeitig oder überlappend an der Mastereinrichtung eintreffen; und
- eine Anzeige des so gewonnenen Reifendruckstatus für jeden überwachten Luftreifen mit Hilfe der Anzeigeelemente erfolgt die an der Fernbedienungs-Schließeinrichtung oder an einem Zusatzgerät angebracht sind, das an oder benachbart zu der Fernbedienungs-Schließeinrichtung angeordnet ist.

19. Verfahren nach Anspruch 18,
**dadurch gekennzeichnet, daß**
die Ablaufsteuerung eine Routine mit nachstehenden Schritten (a) bis (i) durchführt;
a) eine Betätigung eines Tasters an der Fernbedienungs-Schließeinrichtung zur Erzeugung eines Steuerbefehls der Kfz-Schließanlage bewirkt unmittelbar oder mittelbar auch eine Aktivierung der regeläßig im Ruhezustand gehaltenen Mastereinrichtung;
b) nach ihrer Aktivierung erzeugt und sendet die Mastereinrichtung ein Abfragesignal aus, das wenigstens eine Synchronisierbitfolge für sämtliche Moduleinrichtungen und eine Adresse für eine ausgewählte Moduleinrichtung sowie gegebenenfalls eine Prüfziffer enthält. Ferner selektiert die Mastereinrichtung das der Adresse entsprechende Anzeigeelement;
c) nach Aussendung des Abfragesignals schaltet die Mastereinrichtung auf Empfang;
d) die Synchronisierbitfolge des Abfragesignals aktiviert sämtliche, regelmäßig im Ruhezustand gehaltenen Moduleinrichtungen. An jeder Moduleinrichtung läuft eine Routine ab, die überprüft, ob die im Register der Moduleinrichtung gespeicherte Kennung mit der Adresse des Abfragesignals übereinstimmt. Trifft das nicht zu, wird die jeweilige Moduleinrichtung wieder in den Ruhezustand versetzt;
e) diejenige Moduleinrichtung, die Übereinstimmung zwischen Adresse und ihrer Kennung feststellt, löst anschließend eine Routine aus, welche den Reifendruck mißt, und ein Antwortsignal erzeugt und aussendet, das neben der Synchronisierbitfolge ein Nutzsignal enthält, das wenigstens Bits aufweist, die dem gemessenen Reifendruck entsprechen. Anschließend nimmt auch diese Moduleinrichtung erneut den Ruhezustand ein;
f) die Mastereinrichtung empfängt das Antwortsignal, wertet dessen Nutzsignal aus, erzeugt ein entsprechendes Anzeigesignal und übermittelt dieses an das selektierte Anzeigeelement;
g) je nach Ablauf von 0,2 sec, vorzugsweise nach Ablauf von 0,3 sec werden die Schritte (b) bis (f) für jedes weitere zu prüfende Rad wiederholt, wobei jeweils die dem zu prüfenden Rad entsprechende Adresse gewählt und in das Abfragesignal eingesetzt wird;
h) nach Beendigung der Abfrage aller zu prüfenden Räder nimmt die Mastereinrichtung wieder ihren Ruhezustand ein;
i) nach Ablauf einer gegebenen Zeitspanne wird die von den Anzeigeelementen erzeugte Reifendruckstatus-Anzeige gelöscht.

20. Verfahren nach Anspruch 19,
**dadurch gekennzeichnet, daß**
die Ablaufsteuerung eine Routine durchführt, die anstelle der Schritte (c), (e) und (f) nachstehende Schritte (c'), (e') und (f' ) vorsieht:
c') nach Aussendung des Abfragesignals aktiviert die Mastereinrichtung ein Register, das eine Kennung enthält, die der gerade gesendeten Adresse entspricht, und schaltet daraufhin auf Empfang um;
e') die Moduleinrichtung sendet ein Antwortsignal, das zusätzlich zu Synchronisierbitfolge und Nutzsignal auch die Kennung der sendenden Moduleinrichtung enthält;
f' ) die Mastereinrichtung empfängt das Antwortsignal, prüft ob die im Antwortsignal enthaltene Kennung mit der an der Mastereinrichtung aktivierten Kennung übereinstimmt und führt bei festgestellter Übereinstimmung die weiteren Teilschritte des Schrittes (f) aus.

21. Verfahren nach einem der Ansprüche 18 bis 20,
**dadurch gekennzeichnet, daß**
zusätzlich eine besondere Routine zur Initialisierung des Austausches von Adressen und Kennungen zwischen der Mastereinrichtung und einer selektierten Moduleinrichtung vorgesehen ist;
zur Durchführung dieser besonderen Routine die, eine integrierte Mastereinrichtung enthaltende Fernbedienungs-Schließeinrichtung oder das mit der Mastereinrichtung versehene Zusatzgerät in unmittelbare Nähe desjenigen Rades gebracht wird, das mit der selektierten Moduleinrichtung versehen ist; und
an der Fernbedienungs-Schließeinrichtung oder an diesem Zusatzgerät diese besondere Routine ausgelöst wird.

22. Verfahren nach Anspruch 21,
**dadurch gekennzeichnet, daß**
bei dieser besonderen Routine die HF-Datensignalkommunikation zwischen Mastereinrichtung und selektierter Moduleinrichtung bei verminderter Feldstärke durchgeführt wird, so daß ausschließlich ein Datenaustausch zwischen der Mastereinrichtung und der selektierten Moduleinrichtung erfolgt.

## Claims

1. A tire pressure display device
for a vehicle having several wheels, each of said wheels having a pneumatic tire thereon, which is monitored by the device, the device comprising
- an electronic module with said tire and having at least one integrated pressure sensor with measuring and control electronics, said sensor being coupled to a high-frequency transmitter/receiver means (in short: module means);
- another high-frequency transmitter/receiver means located apart from said wheels and coupled to a microprocessor (in short: master means), configured for bi-directional high-frequency signal-data communication with each module means in an interrogation-response mode;
- wherein a tire pressure status of each tire is displayed on at least one display element of a display device actuated by display signals generated by the microprocessor,
**characterized in that**
additionally, providing a remote control locking means for activating a locking system on the vehicle;
wherein an actuation of the remote control locking means for a wireless transmission of a control command to the vehicle for activating the locking system in the vehicle also activates the master means to cause an interrogation of the module means according to a sequence control that ensures that, at no point in time, do response signals from several module means reach the master means at a same or overlapping period in time; and
wherein at least one display element of the tire pressure status display device is situated on the remote control locking means or on an add-on device that is located on or adjacent to the remote control locking means.

2. The tire pressure display device according to claim 1,
**characterized in that**
the master means is permanently installed in the vehicle.

3. The tire pressure display device according to claim 2,
**characterized in that**
the control command for activating the locking system is decoded on the vehicle;
wherein a decoded signal that is characteristic for the vehicle is received after the decoding, said decoded signal activating (unlocking or locking) the locking system and also activating the master means.

4. The tire pressure display device according to claim 2,
**characterized in that**
the display signals that have been generated by the master means located on the vehicle are transmitted by at least one of ultrasound, infrared or high-frequency signals to the display device on the remote control locking means.

5. The tire pressure display device according to claim 1,
**characterized in that**
the master means or a modified master means, also generating the control command for activating the locking system in the vehicle, is integrated into the remote control locking means.

6. The tire pressure display device according to claim 1,
**characterized in that**
the master means is accommodated on or in the add-on device; and
wherein an actuation of the remote control locking means also activates the master means.

7. The tire pressure display device according to anyone of the claims 1 to 6,
**characterized in that**
the master means and the module means are each provided with a transceiver including a receiving part having a follower amplifier which has two signal amplifiers linked to each other via a SAW delay line; and
wherein the signal amplifiers - independent of each other - being controlled by an impulse generator in such a way that the two signal amplifiers are never switched into an ON position at the same time.

8. The tire pressure display device according to anyone of the claims 1 to 7,
**characterized in that**
the sequence control provides a routine including the following steps (a) to (i):
a) an actuation of a pushbutton on the remote control locking means to generate a control command for the vehicle locking system directly or indirectly activates the master means that is normally kept in a sleep mode;
b) after being activated, the master means generates and sends an interrogation signal that contains at least a synchronization bit sequence for all of the module means and an address for a selected module means as well as optionally a check digit, wherein the master means selects a display element corresponding to the address;
c) after sending the interrogation signal, the master means switches to a receiving mode;
d) the synchronization bit sequence of the interrogation signal activates all of the module means, which are normally kept in the sleep mode, wherein at each module means, a routine is run that checks whether a code stored in the register of the module means corresponds to the address of the interrogation signal, and if this is not the case, then a particular module means is put again into the sleep mode;
e) the particular module means that detects a correspondence between the address and the code initiates a routine that measures a tire pressure, and generates and sends a response signal that, in addition to the synchronization bit sequence, contains a useful signal having at least bits that correspond to the measured tire pressure, wherein the module means is again placed into the sleep mode;
f) the master means receives the response signal, evaluates the useful signal, generates a corresponding display signal, and transmits the corresponding display signal to the selected display element;
g) in each case, after 0.2 seconds, preferably after 0.3 seconds have elapsed, steps (b) to (f) are repeated for each additional tire to be checked, wherein an address corresponding to a particular tire to be checked is selected and incorporated into the interrogation signal;
h) after completion of the interrogation of all of the tires to be checked, the master means is placed again into the sleep mode;
i) after a given time period has elapsed, the tire pressure status generated by the display elements is deleted.

9. The tire pressure display device according to claim 8,
**characterized in that**
a routine is performed wherein, instead of the steps (c), (e) and (f) the following steps (c'), (e') and (f) are provided:
c') after sending an interrogation signal, the master means activates a register that contains a code corresponding to the address just sent, and then switches to a receiving mode;
e') the module means sends a response signal that, in addition to the synchronisation bit sequence and a useful signal, also contains a code of a sending module means; and
f) the master means receives the response signal, checks whether a code contained in the response signal corresponds to a code activated in the master means and, a correspondence has been determined said master means performs the further partial steps of step (f).

10. The tire pressure display device according to claim 8 or 9,
**characterized in that**
the master means and the module means each are equipped with an electronic memory having a register and logic elements which store digital addresses and codes, and carry out routines in the sequence control.

11. A remote control locking means
for a tire pressure display device
according to anyone of the claims 1 to 10,
**characterized in that**
the remote control locking means (1) includes at least one display element (21, 22, 23, 23, 24) of the tire pressure display device (20) which are actuated by display signals generated b the master means (15).

12. A remote control locking means
for a tire pressure display device
according to anyone of the claims 1 to 10,
**characterized in that**
additionally providing an add-on device (30) located on or adjacent to the remote control locking means (1); and
said add-on device (30) comprises at least one display element (31, 32, 33,
34, 35) of the tire pressure status display device (20') actuated by display signals generated by the master means.

13. The remote control locking means according to claim 11 or 12,
**characterized in that**
a display element (21, 22, 23, 24, 25) related to each monitored tire is located on the remote control locking means (1) or a display element (31, 32, 33, 34, 35) related to each monitored tire is located on the add-on device (30).

14. The remote control locking means according to anyone of the claims 11 to 13,
**characterized in that,**
each display element (21, 22, 23, 24, 25 or 31, 32, 33, 34, 35) has one or more light emitting diode(s) that light up in different colours after appropriate actuation by the display signals in order to display a tire pressure status.

15. The remote control locking means according to anyone of the claims 11 to 14,
**characterized in that**
each display element (21, 22, 23, 24, 25 or 31, 32, 33, 34, 35) is located on an associated pushbutton (21', 22', 23', 24', 25' or 31' 32' 33' 34' 35');
wherein an actuation of said associated pushbuttons (21', 22', 23', 24', 25' or 31', 32' 33' 34' 35') triggers an initialization for exchanging and storing addresses and codes between the master means located on the remote control locking means (1) or the master means located on or in the add-on device (30) and a particular module means associated with a certain, just-actuated pushbutton.

16. The remote control locking means according to claim 11,
**characterized in that**
the master means is integrated into the remote control locking means (1) or a modified master means (15) generating in addition the control command for activating the locking system in the vehicle is integrated into the remote control locking means (1).

17. The remote control locking means according to claim 12,
**characterized in that**
the master means is accommodated on or in the add-on device (30).

18. A method for the operation of a tire pressure display device intended for a vehicle with plural pneumatic tires,
having:
- associated with each monitored tire, an electronic module having at least one integrated pressure sensor with measuring and control electronics, said sensor being coupled to a high-frequency transmitter/receiver means (in short: module means);
- away from the wheels, at least another high-frequency transmitter/receiver means coupled to a microprocessor (in short: master means), which is configured for bi-directional high-frequency signal-data communication with each module means in an interrogation-response mode;
- a display device with one or more display element(s) for displaying a tire pressure status of each monitored tire;
- a remote control locking means having a pushbutton to trigger a control command that activates a locking system of the vehicle;
the method being **characterized in that**
- actuating the pushbutton of the remote control locking to activate the master means which then initializes the module means;
- controlling an initialization sequence of each module means according to a sequence control that ensures that, at no point in time, do response signals from different module means reach the master means at the same time or overlapping period of time; and
- displaying a tire pressure status thus obtained for each monitored tire display on elements situated on the remote control locking means or on an add-on device that is located on or adjacent to the remote control locking means.

19. The method according to claim 18,
**characterized in that**
controlling an initialization sequence of each module means includes the following steps (a) to (i):
a) actuating the pushbutton on the remote control locking means and generating a control command for the vehicle locking system to activate directly or indirectly the master means normally kept in a sleep mode;
b) generating, in the master means after activation, an interrogation signal that contains at least a synchronization bit sequence for all of the module means, an address for a selected module means, and optionally a check digit, wherein the master means selects a display element corresponding to the address;
c) switching, after generating the interrogation signal, the master means to a receiving mode;
d) activating, by the synchronization bit sequence of the interrogation signal all of the module means, which are normally kept in the sleep mode, and checking whether a code stored in a register of the module means corresponds to the address of the interrogation signal, and if the code does not correspond to the address, placing said particular module means again into the sleep mode;
e) initiating, in the particular module means, when the code corresponds to the address a routine that measures a tire pressure, and sending a response signal that, in addition to the synchronization bit sequence, contains a useful signal having at least bits that correspond to a measured tire pressure, and placing said module means again into the sleep mode;
f) receiving the response signal, and the useful signal in the master means and transmitting a corresponding display signal to the selected display element;
g) repeating after 0.2 seconds, or preferably after 0.3 seconds have elapsed, steps (b) to (f) for each additional tire to be checked, wherein an address corresponding to said additional tire to be checked is selected and incorporated into the interrogation signal;
h) placing, after completion of the interrogation of all of said additional tire to be checked, the master means into the sleep mode; and
i) after a given time period has elapsed, deleting the tire pressure status displayed by the display elements.

20. The method according to claim 19,
**characterized in that**
controlling in such a manner that the initializing sequence includes the following steps (c'), (e') and (f) instead of the steps (c), (e) and (f):
c') after sending the interrogation signal, activating by the master means a register that contains a code corresponding to an address just sent, and then switching to the receiving mode;
e') sending, by the module means, a response signal that, in addition to the synchronization bit sequence and the useful signal, also contains the code of a sending module means;
f) receiving, in the master means, the response signal, and checking whether a code contained in the response signal corresponds to a code activated in the master means and, once a correspondence has been determined, transmitting the corresponding signal to the selected display element.

21. The method according to anyone of the claims 18 to 20,
**characterized in that**
further providing a special routine for initialization of addresses and code exchange between the master means and a selected module means;
wherein the remote control locking means containing an integrated master means, is brought into an immediate vicinity of a tire associated with the selected module means; or the add-on device provided with the master means is brought into an immediate vicinity of a tire associated with the selected module means; and
wherein this special routine is triggered on the remote control locking means or on the add-on device.

22. The method according to claim 21,
**characterized in that**
during performing this special routine, providing a routine step wherein a high-frequency data signal communication between the master means and the selected module means is carried out at a reduced field strength, such that a data exchange takes place exclusively between the master means and the selected module means.

## Revendications

1. Un dispositif d'affichage de la pression de pneu
pour un véhicule à plusieurs roues dont chacune est munie d'un bandage pneumatique qui est surveillé par un dispositif comprenant comme suit :
- un module électronique qui contient au moins un capteur de pression intégré avec un système électronique de mesure et de contrôle, le capteur étant couplé à un moyen émetteur/récepteur haute fréquence (en bref : moyen module);
- au moins un autre moyen émetteur/récepteur haute fréquence (en bref : moyen maître) disposé loin des roues et couplé à un microprocesseur, qui est conçu pour une communication HF bidirectionnelle de données de signaux avec chaque moyen module au mode interrogateur-répondeur ;
- l'état de la pression de pneu de chaque roue étant affiché par au moins un élément d'affichage d'un dispositif d'affichage qui est commandé par des signaux d'affichage générés par le microprocesseur,
**caractérisé en ce qu'**
il comprend en outre un dispositif de verrouillage à distance activant le système de verrouillage du véhicule ;
l'actionnement du dispositif de verrouillage à distance pour la transmission sans fil au véhicule d'une instruction de commande pour activer le dispositif de verrouillage, activant également le moyen maître, qui par la suite procède à une interrogation des moyens modules par commande séquentielle assurant qu'à aucun moment, des signaux de réponse venant de plusieurs moyens modules n'arrivent de manière simultanée ou chevauchante dans le temps au moyen maître ; et **en ce qu'**
au moins un élément d'affichage du dispositif d'affichage de la pression de pneu est installé sur le dispositif de verrouillage à distance ou sur un autre dispositif supplémentaire qui est situé sur le ou adjacent au dispositif de verrouillage à distance.

2. Le dispositif d'affichage de la pression de pneu conformément à la revendication 1,
**caractérisé en ce que**
le moyen maître est installé de manière permanente dans le véhicule.

3. Le dispositif d'affichage de la pression de pneu conformément à la revendication 2,
**caractérisé en ce que**
l'instruction de commande transmise sans fil au véhicule pour activer le dispositif de verrouillage est décodée au niveau du véhicule ;
que le signal reçu après décodage qui est caractéristique du véhicule provoque l'activation (le verrouillage et le déverrouillage) du dispositif de verrouillage ; et
que ce signal reçu après décodage caractéristique du véhicule sert également à activer le moyen maître.

4. Le dispositif d'affichage de la pression de pneu conformément à la revendication 2,
**caractérisé en ce que**
les signaux d'affichage générés par le moyen maître situé dans le véhicule sont transmis par des signaux ultrasonores, infrarouges ou HF au dispositif d'affichage du dispositif de verrouillage à distance.

5. Le dispositif d'affichage de la pression de pneu conformément à la revendication 1,
**caractérisé en ce que**
le moyen maître ou un moyen maître modifié qui génère également l'instruction de commande pour activer le dispositif de verrouillage du véhicule est intégré dans le dispositif de verrouillage à distance.

6. Le dispositif d'affichage de la pression de pneu conformément à la revendication 1,
**caractérisé en ce que**
le moyen maître est agencé sur ou dans le dispositif supplémentaire ; et
que l'actionnement du dispositif de verrouillage à distance pour la transmission sans fil au véhicule d'une instruction de commande pour activer le dispositif de verrouillage du véhicule, active également ce moyen maître.

7. Le dispositif d'affichage de la pression de pneu conformément à une des revendications 1 à 6,
**caractérisé en ce que**
le moyen maître et les moyens modules sont munis chacun d'un transmetteur dont le receveur est muni d'une amplification en cascade avec deux amplificateurs de signal qui sont reliés l'un à l'autre par une ligne à onde acoustique de surface ;
ces amplificateurs de signal étant contrôlés indépendamment l'un de l'autre par un générateur d'impulsions de manière à ce que les deux amplificateurs de signal ne sont jamais commutés en MARCHE simultanément.

8. Le dispositif d'affichage de la pression de pneu conformément à une des revendications 1 à 7,
**caractérisé en ce que**
la commande séquentielle comprend une routine avec les étapes (a) à (i) comme suit :
a) L'actionnement d'un bouton-poussoir sur le dispositif de verrouillage à distance pour la génération d'une instruction de commande adressée au système de verrouillage du véhicule active également, et ceci directement ou indirectement, l'activation du moyen maître qui se trouve normalement en mode de repos ;
b) le moyen maître étant activé, il génère et émet un signal d'interrogation qui comprend au moins une séquence de synchronisation bit pour tous les moyens modules et une adresse pour un moyen module sélectionné ainsi qu'en option un chiffre-clé. En plus, le moyen maître sélectionne l'élément d'affichage correspondant à l'adresse ;
c) le signal d'interrogation étant émis, le moyen maître commute en mode de réception ;
d) la séquence de synchronisation bit du signal d'interrogation active tous les moyens modules qui se trouvent normalement en mode de repos, une routine étant mise en marche dans chaque moyen module qui contrôle si le code sauvegardé dans le registre du moyen module correspond à l'adresse du signal d'interrogation. Si ce n'est pas le cas, ce moyen module particulier est de nouveau remis au mode de repos ;
e) le moyen module particulier qui constate la correspondance entre l'adresse et le code fait démarrer une routine qui mesure la pression du pneu et génère et émet un signal de réponse qui comprend outre la séquence de synchronisation bit, un signal utile comprenant au moins des bits qui correspondent à la pression de pneu mesurée. Ensuite, ce moyen module est également remis en mode de repos ;
f) le moyen maître reçoit le signal de réponse, évalue son signal utile, génère un signal d'affichage y correspondant et le transmet à l'élément d'affichage sélectionné ;
g) chaque fois après écoulement de 0,2 secs, de préférence après écoulement de 0,3 secs, les étapes de (b) à (f) sont répétées pour toute autre roue à contrôler, l'adresse correspondant à la roue particulière à contrôler étant chaque fois sélectionnée et incorporée dans le signal d'interrogation ;
h) l'interrogation de toutes les roues à contrôler étant terminée, le moyen maître est remis en mode de repos ;
i) après écoulement d'un temps donné, l'affichage de l'état de la pression de pneu généré par les éléments d'affichage est effacé.

9. Le dispositif d'affichage de la pression de pneu conformément à la revendication 8,
**caractérisé en ce qu'**
une routine est exécutée dans laquelle les étapes (c'), (e') et (f) suivantes sont prévues à la place des étapes (c), (e) et (f) :
c') le signal d'interrogation étant émis, le moyen maître active un registre comprenant un code qui correspond à l'adresse qui vient d'être émise, et commute en mode de réception ;
e') le moyen module émet un signal de réponse qui comprend outre la séquence de synchronisation bit et le signal utile, le code du moyen module émetteur ;
f) le moyen maître reçoit le signal de réponse, vérifie si le code compris dans le signal de réponse correspond au code activé dans le moyen maître et poursuit si la correspondance a été constatée, les autres phases de l'étape (f).

10. Le dispositif d'affichage de la pression de pneu conformément à la revendication 8 ou 9,
**caractérisé en ce que**
le moyen maître et les moyens modules sont munis chacun d'une mémoire électronique ayant un registre et des éléments logiques pour la mise en mémoire d'adresses numériques et de codes ainsi que pour l'exécution des routines de la commande séquentielle.

11. Un dispositif de verrouillage à distance
pour un dispositif d'affichage de la pression de pneu
conformément à une des revendications 1 à 10,
**caractérisé en ce que**
le dispositif de verrouillage à distance (1) comprend au moins un élément d'affichage (21, 22, 23, 24, 25) du dispositif d'affichage de la pression de pneu (20) commandé par les signaux d'affichage qui sont générés par le moyen maître (15).

12. Un dispositif de verrouillage à distance
pour un dispositif d'affichage de la pression de pneu
conformément à une des revendications 1 à 10,
**caractérisé en ce qu'**
il comprend en outre un dispositif supplémentaire (30) qui est situé sur le ou adjacent au dispositif de verrouillage à distance (1); et
que ce dispositif supplémentaire (30) est muni d'au moins un élément d'affichage (31, 32, 33, 34, 35) du dispositif d'affichage de la pression de pneu (20') qui est commandé par les signaux d'affichage générés par le moyen maître.

13. Un dispositif de verrouillage à distance conformément à la revendication 11 ou 12,
**caractérisé en ce qu'**
il comprend un élément d'affichage (21, 22, 23, 24, 25) correspondant à chaque pneu surveillé qui se trouve sur le dispositif de verrouillage à distance (1) ou un élément d'affichage (31, 32, 33, 34, 35) correspondant à chaque pneu surveillé qui se trouve sur le dispositif supplémentaire (30).

14. Un dispositif de verrouillage à distance conformément à une des revendications 11 à 13,
**caractérisé en ce que**
chaque élément d'affichage (21, 22, 23, 24, 25 ou 31, 32, 33, 34, 35) est muni d'un ou de plusieurs diode(s) électroluminescente(s) qui s'allume(nt) après activation respective par les signaux d'affichage, en couleurs différentes pour afficher l'état de la pression de pneu.

15. Un dispositif de verrouillage à distance conformément à une des revendications 11 à 14,
**caractérisé en ce que**
chaque élément d'affichage (21, 22, 23, 24, 25 ou 31, 32, 33, 34, 35) se trouve sur un bouton-poussoir associé (21', 22', 23', 24', 25' ou 31', 32', 33', 34', 35') ; et que
l'actionnement de ces boutons-poussoirs (21', 22', 23', 24', 25' ou 31', 32', 33', 34', 35') fait démarrer l'initialisation de l'échange et de la mise en mémoire des adresses et codes entre le moyen maître sur le dispositif de verrouillage à distance (1) ou le moyen maître sur le dispositif supplémentaire (30) et le moyen module particulier auquel le bouton-poussoir qui vient tout juste d'être actionné est associé.

16. Un dispositif de verrouillage à distance conformément à la revendication 11,
**caractérisé en ce que**
le moyen maître ou un moyen maître modifié (15) qui génère également l'instruction de commande activant le système de verrouillage du véhicule, est intégré dans le dispositif de verrouillage à distance (1).

17. Un dispositif de verrouillage à distance conformément à la revendication 12,
**caractérisé en ce qu'**
un moyen maître est installé sur ou dans le dispositif supplémentaire (30).

18. Méthode pour faire fonctionner le dispositif d'affichage de la pression de pneu destiné à un véhicule ayant plusieurs roues à bandage pneumatique, qui comprend :
- un module électronique associé à chaque pneu surveillé, qui contient au moins un capteur de pression intégré avec un système électronique de mesure et de contrôle, ce capteur étant couplé à un moyen émetteur/récepteur haute fréquence (en bref : moyen module) ;
- au moins un autre moyen émetteur/récepteur haute fréquence disposé loin des roues et couplé à un microprocesseur (en bref : moyen maître), qui est conçu pour une communication HF bidirectionnelle de données de signaux avec chaque moyen module en mode interrogateur-répondeur ;
- un dispositif d'affichage ayant un ou plusieurs élément(s) d'affichage affichant la pression de pneu de chaque pneu surveillé ;
- un dispositif de verrouillage à distance muni d'un bouton-poussoir pour générer une instruction de commande qui déclenche l'activation d'un système de verrouillage du véhicule ;
**caractérisée en ce que**
- l'actionnement du bouton-poussoir du dispositif de verrouillage à distance actionne également l'activation du moyen maître, qui par la suite procède à l'initialisation des moyens modules ;
- les moyens modules sont initialisés par une commande séquentielle qui assure qu'à aucun moment, des signaux de réponse venant de plusieurs moyens modules n'arrivent de manière simultanée ou chevauchante dans le temps au moyen maître ;
- l'état de pression de pneu ainsi obtenu est affiché pour chaque pneu surveillé au moyen des éléments d'affichage qui se trouvent sur le dispositif de verrouillage à distance ou sur un dispositif supplémentaire, qui se trouve sur ou adjacent au dispositif de verrouillage à distance.

19. Méthode conformément à la revendication 18,
**caractérisée en ce que**
l'instruction de commande exécute une routine comprenant les étapes suivantes de (a) à (i) :
a) L'actionnement d'un bouton-poussoir sur le dispositif de verrouillage à distance pour la génération d'une instruction de commande adressée au système de verrouillage du véhicule active directement et indirectement l'activation du moyen maître qui se trouve normalement en mode de repos ;
b) le moyen maître étant activé, il génère et émet un signal d'interrogation qui comprend au moins une séquence de synchronisation bit pour tous les moyens modules et une adresse pour un moyen module sélectionné ainsi qu'en option un chiffre-clé. En plus le moyen maître sélectionne l'élément d'affichage correspondant à l'adresse ;
c) le signal d'interrogation étant émis, le moyen maître commute en mode de réception ;
d) la séquence de synchronisation bit du signal d'interrogation active tous les moyens modules qui se trouvent normalement en mode de repos, une routine étant mise en marche dans chaque moyen module qui contrôle si le code sauvegardé dans le registre du moyen module correspond à l'adresse du signal d'interrogation. Si ce n'est pas le cas, ce moyen module particulier est de nouveau remis en mode de repos ;
e) le moyen module particulier qui constate la correspondance entre l'adresse et le code fait démarrer une routine qui mesure la pression du pneu et génère et émet un signal de réponse qui comprend outre la séquence de synchronisation bit, un signal utile comprenant au moins des bits qui correspondent à la pression de pneu mesurée. Ensuite, ce moyen module est également remis en mode de repos ;
f) le moyen maître reçoit le signal de réponse, évalue son signal utile, génère un signal d'affichage y correspondant qui est transmis à l'élément d'affichage sélectionné ;
g) chaque fois après écoulement de 0,2 sec, de préférence après écoulement de 0,3 sec, les étapes de (b) à (f) sont répétées pour toute autre roue à contrôler, l'adresse correspondant à la roue particulière à contrôler étant chaque fois sélectionnée et incorporée dans le signal d'interrogation ;
h) l'interrogation de toutes les roues à contrôler étant terminée, le moyen maître est remis en mode de repos ;
i) après écoulement d'un temps donné, l'affichage de l'état de la pression de pneu généré par les éléments d'affichage est effacé.

20. Méthode conformément à la revendication 19,
**caractérisée en ce que**
l'instruction de commande exécute une routine comprenant à la place des étapes (c), (e) et (f), les étapes (c'), (e') et (f) :
c') le signal d'interrogation étant émis, le moyen maître active un registre comprenant un code qui correspond à l'adresse qui vient d'être émise et commute alors en mode de réception ;
e') le moyen module émet un signal de réponse qui comprend outre la séquence de synchronisation bit et le signal utile également le code du moyen module émetteur ; f) le moyen maître reçoit le signal de réponse, vérifie si le code compris dans le signal de réponse correspond au code activé dans le moyen maître et poursuit si la correspondance a été constatée, les autres phases partielles de l'étape (f).

21. Méthode conformément à une des revendications 18 à 20,
**caractérisée en ce qu'**
en outre une routine particulière est prévue pour l'initialisation de l'échange d'adresses et de codes entre le moyen maître et un moyen module sélectionné ; que
le dispositif de verrouillage à distance comprenant un moyen maître intégré ou le dispositif supplémentaire muni du moyen maître est installé pour l'exécution de cette routine particulière, à proximité immédiate de la roue qui est munie du moyen module sélectionné ; et que
cette routine particulière est démarrée sur le dispositif de verrouillage à distance ou sur le dispositif supplémentaire.

22. Méthode conformément à la revendication 21,
**caractérisée en ce que**
pendant cette routine particulière, la communication HF des données de signaux entre le moyen maître et le moyen module sélectionné est exécutée à intensité réduite du champ de sorte que cet échange de données n'ait lieu qu'entre le moyen maître et le moyen module sélectionné.
